# EUROPÄISCHE PATENTSCHRIFT

(11) **EP 4 306 198 B1**
(45) Veröffentlichungstag und Bekanntmachung des Hinweises auf die Patenterteilung: **29.01.2025**
(21) Anmeldenummer: 23184800.3
(22) Anmeldetag: 11.07.2023
(51) Int. Cl.: B01D 46/00, B01D 46/121

(54) **FILTER MIT V-FÖRMIG ANGEORDNETEN MEDIENPAKETEN UND SCHUTZGITTER**
FILTER WITH V-SHAPED MEDIA PACKETS AND PROTECTIVE GRID
FILTRE AVEC PAQUETS DE SUPPORTS DISPOSÉS EN V ET GRILLE DE PROTECTION

(30) Priorität: 14.07.2022 DE 102022117649
(43) Veröffentlichungstag der Anmeldung: 17.01.2024
(73) Patentinhaber: Carl Freudenberg KG, 69469 Weinheim (DE)
(72) Erfinder: Schumacher, Sascha, 69483 Wald-Michelbach (DE); Weber, Patrick, 69469 Weinheim (DE); Schroth, Thomas, 67240 Bobenheim-Roxheim (DE); Tapper, Renate, 64625 Bensheim (DE); Fritz, Florian, 69509 Mörlenbach (DE)

(56) Entgegenhaltungen:
- EP-A1- 3 831 461

## Beschreibung

Die Erfindung betrifft einen Filter mit einer Mehrzahl von Filtermedienpaketen, wobei je zwei Filtermedienpakete v-förmig angeordnet sind und die Filtermedienpakete von einem Gas zu dessen Reinigung von einer Rohgasseite des Filters zu einer Reingasseite des Filters durchströmt werden, mit einem Rahmen zur Aufnahme der Filtermedienpakete und mit Schutzgittern, wobei je ein Schutzgitter reingasseitig an einem jeweiligen Filtermedienpaket angeordnet ist.

### Stand der Technik

In Gasturbinen, Kompressoren, Klima- und Lüftungsanlagen kommen unterschiedlichste Filter zur Reinigung von Zuluftströmen zum Einsatz, z.B. Kassettenfilter.

Aus der EP 3 831 461 A1 ist ein Filter mit einer Mehrzahl von Filtermedienpaketen bekannt, wobei je zwei Filtermedienpakete v-förmig angeordnet sind und die Filtermedienpakete von einem Gas zu dessen Reinigung von einer Rohgasseite des Filters zu einer Reingasseite des Filters durchströmt werden. Solche Filter werden auch als V-Zellen- bzw. im Englischen als V-Bank-Filter bezeichnet. Der Filter besitzt einen Rahmen zur Aufnahme der Filtermedienpakete mit Schutzgittern mit rautenförmiger Gitterstruktur für das Filtermedium, wobei je ein Schutzgitter reingasseitig an einem jeweiligen Filtermedienpaket angeordnet ist. Solche Schutzgitter werden auch als Berstschutzgitter bezeichnet. Durch die Schutzgitter kann das Filtermedium in seiner Position gehalten und vor Beeinträchtigung und Beschädigung, insbesondere bei der Montage und im Betrieb, geschützt werden. Durch die Schutzgitter wird verhindert, dass sich Teile des Filtermediums lösen und in nachfolgende Anlagen gelangen und dort Schäden verursachen könnten, wie z.B. in Gasturbinen. Der Aufbau des Gitters soll gemäß diesem Stand der Technik bezüglich Stabilität und Materialbedarf optimiert sein, wozu eine aufwändige Momentenbetrachtung durchgeführt wird.

### Aufgabenstellung

Aufgabe der vorliegenden Erfindung ist es, einen Filter mit einem besonders stabilen und fertigungstechnisch günstigen Schutzgitter bei gleichzeitig einfachem Aufbau und niedrigem Druckverlust zu schaffen.

### Technische Lösung

Gelöst wird diese Aufgabe durch einen Kassettenfilter wie er nachfolgend beschrieben und beansprucht ist.

Erfindungsgemäß wurde als vorteilhaft erkannt Schutzgitter mit zentrisch ausgerichteten, z.B. konzentrischen um ein Zentrum herum angeordneten Stegstrukturen zu verwenden.

Die Erfindung betrifft einen Kassettenfilter mit einer Mehrzahl von Filtermedienpaketen, wobei je zwei Filtermedienpakete immer paarweise v-förmig angeordnet sind, einen sogenannten V-Zellen-Filter bzw. im Englischen auch als V-Bank-Filter bezeichnet. Die Filtermedienpakete werden von einem Gas zu dessen Reinigung von einer Rohgasseite des Filters zu einer Reingasseite des Filters durchströmt. Der Filter besitzt weiter einen Rahmen zur Aufnahme der Filtermedienpakete und Schutzgitter, wobei je ein Schutzgitter reingasseitig an einem jeweiligen Filtermedienpaket angeordnet ist. Erfindungsgemäß weisen die Schutzgitter eine Gitterstruktur auf mit einer Mehrzahl von zentrisch um mindestens ein Zentrum des Schutzgitters angeordneten im Wesentlichen geschlossenen Kurven unterschiedlicher Größe z.B. konzentrischen ringförmigen Kurven, und weisen eine Vielzahl von radial zum Zentrum des Schutzgitters orientierten Verbindern auf, welche die geschlossenen Kurven miteinander verbinden. Sowohl die Kurven als auch die Verbinder bilden die Stege des Schutzgitters aus. Die Schutzgitter besitzen damit eine spinnennetzförmige Gitterstruktur.

In vorteilhafter Weise können durch diese Gitterstruktur auf das Schutzgitter wirkende Kräfte gut und gleichmäßig verteilt werden und anschließend in den Rahmen des Kassettenfilters abgeleitet werden. In anderen Worten: Durch das erfindungsgemäße Design des Schutzgitters findet eine gleichmäßigere Kräfteverteilung auf alle vier Seiten des Rahmens statt, was eine homogenere Spannungsverteilung im Schutzgitter bewirkt und somit beispielsweise schmälere Strukturen der Stege bei gleicher Funktionalität ermöglicht. Geschlossene Kurven meint hier, dass die Kurven zwar an manchen Stellen kleine Unterbrechungen aufweisen können. Die Kurven sind also nicht im mathematischen Sinn stetig oder zusammenhängend, bilden jedoch einen Steg der Gitterstruktur aus, welcher gekennzeichnet ist durch eine geschlossene Erstreckung um das Zentrum des Schutzgitters herum.

Berechnungen haben ergeben, dass sich einzelnen Unterbrechungen in den geschlossenen Kurven nicht nachteilig auf die Stabilität des Schutzgitters auswirken.

Erfindungsgemäß sind die geschlossenen Kurven als konzentrische Ringe bzw. Ovale ausgebildet, was auch als Eikurve oder Eilinie bezeichnet werden kann, insbesondere als Kreise oder Ellipsen.

In einer besonders vorteilhaften und daher bevorzugten Weiterbildung des erfindungsgemäßen Filters sind die Verbinder zwischen je einer ersten und einer zweiten weiter entfernt vom Zentrum gelegenen geschlossenen Kurve radial versetzt zu Verbindern zwischen der zweiten und einer nächsten weiter entfernt vom Zentrum gelegenen geschlossenen Kurve angeordnet, derart, dass keine vom Zentrum des Schutzgitters geradlinig zum Rand des Schutzgitters führende Streben gebildet werden. Auch von einem ersten Rand zu einem anderen Rand des Schutzgitters führende geradlinige Streben sind nicht vorhanden. Diese Ausgestaltung hat den Vorteil, dass für die Verteilung von auf das Schutzgitter wirkenden Kräften viele Verbinder genutzt werden und die Kräfte gleichmäßig verteilt werden. Dadurch kann der Querschnitt von geschlossenen Kurven und Verbindern geringgehalten und Material eingespart werden.

In Weiterbildung des Filters werden die geschlossenen Kurven in den Randbereichen der Schutzgitter durch Ausschnitte der Kurven gebildet, z.B. im Fall von kreisförmigen Kurven und einem rechteckigen Schutzgitter durch Teilkreise im Bereich der vier Ecken des Schutzgitters. So kann die zentrische Struktur bis in den Randbereich hinein fortgesetzt werden. Dies ist besonders bei einer rechteckigen Außenkontur der Schutzgitter von Bedeutung.

Bei dem Filter können die geschlossenen Kurven zumindest teilweise einzelne Unterbrechungen aufweisen, insbesondere in den Randbereichen der Schutzgitter.

In verschiedenen Varianten des Filters können die geschlossenen Kurven zentrisch um ein, zwei, drei oder vier Zentren herum angeordnet sein. So kann in vorteilhafter Weise der Kraftfluss im Schutzgitter gestaltet werden. Zwei oder drei oder vier Zentren werden besonders dann bevorzugt, wenn das Schutzgitter eine große flächenmäßige Erstreckung aufweist und / oder wenn das Schutzgitter ein ungleiches Kantenlängenverhältnis aufweist (Länge-Breite) und / oder wenn die Gitterstruktur mit besonders geringen Querschnitten der Stege (also der geschlossenen Kurven und der Verbinder) gestaltet werden soll.

In Weiterbildung des Filters wird ein jeweiliges Schutzgitter von einer Randstrebe umfasst, welche unterbrochen sein kann. Durch die Randstrebe wird die Stabilität des Schutzgitters erhöht, wobei die Unterbrechungen der Randstrebe erlauben Material dort einzusparen, wo es nicht zwingend benötigt wird.

In einer möglichen Ausgestaltung des Filters ist ein jeweiliges Schutzgitter einteilig ausgebildet, insbesondere als Spritzgussteil, und damit fertigungstechnisch besonders günstig gestaltet: Durch die zentrische Ausführung eignet sich das Schutzgitter besonders gut als Spritzgussteil, da es aus dem Zentrum heraus von einer sogenannten Angussspinne aus gefüllt werden kann. Auftretende Bindenähte werden dadurch reduziert, was eine höhere Festigkeit des Schutzgitters zur Folge hat.

Des Weiteren werden durch die Füllung aus dem Zentrum die Spannungen im Schutzgitter reduziert, was in vorteilhafter Weise eine hohe Berstfestigkeit und einen geringen Verzug des Schutzgitters bewirkt.

In Weiterbildung des Filters sind die Schutzgitter mit dem Rahmen stoffschlüssig verbunden, z.B. durch Verkleben oder Vergießen. Dadurch wird eine besonders zuverlässige und dauerhafte Verbindung erreicht. Verfügt ein jeweiliges Schutzgitter über eine Randstrebe, so kann die stoffschlüssige Verbindung im Bereich der Randstreben bestehen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter beispielhafter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1 a und b: einen erfindungsgemäßen Filter in zwei Ansichten
- Fig. 2: eine Explosionsdarstellung eines erfindungsgemäßen Filters
- Fig. 3: eine Detailansicht eines Schutzgitters in einer ersten Ausführungsform
- Fig. 4 a, c: Prinzipskizze von alternativen Ausführungsformen eines Schutzgitters

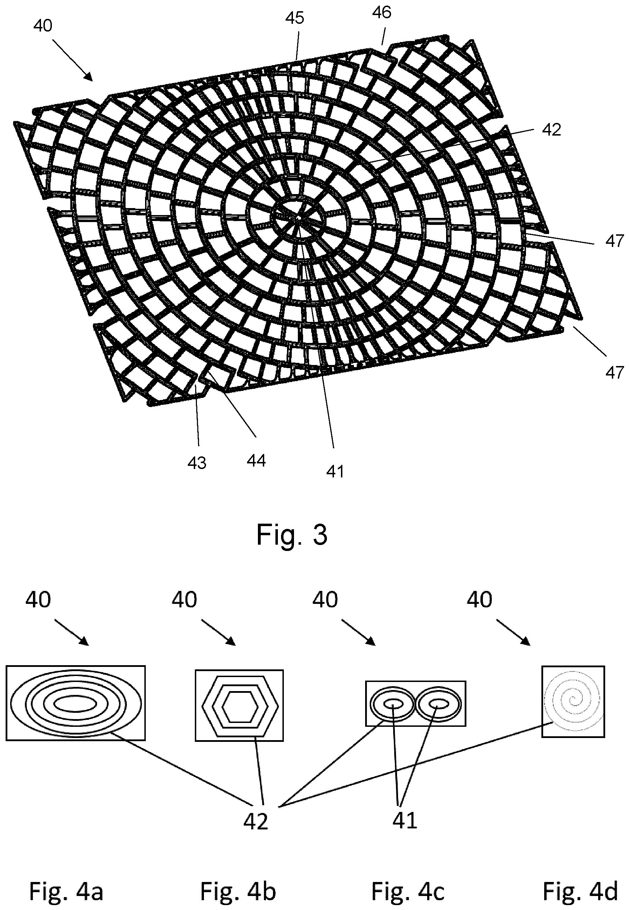

- Fig. 4 b,d: alternative, nicht erfindungsgemäße Variante eines Schutzgitters

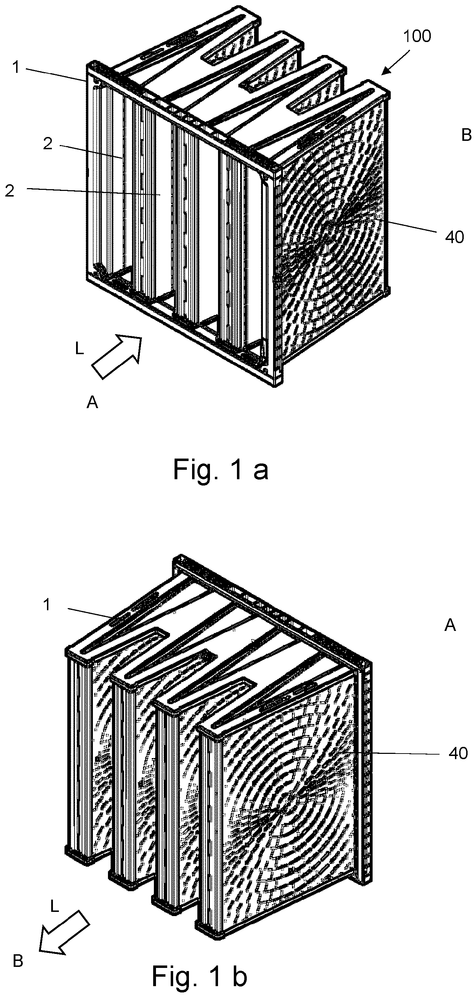

Fig. 1 a und b zeigen einen erfindungsgemäßen Filter 100 in zwei perspektivischen Ansichten.

Der Kassettenfilter 100 besitzt acht Filtermedienpakete 2 welche aus plissiertem Filtermedium gebildet sein können. Je zwei Filtermedienpakete 2 sind immer paarweise v-förmig angeordnet. Die Filtermedienpakete 2 werden von einem Gas zu dessen Reinigung von einer Rohgasseite A des Filters 100 zu einer Reingasseite B des Filters 100 in Durchströmungsrichtung L durchströmt.

Fig. 1a zeigt den Filter 100 von der Rohgasseite A und Fig. 1b von der Reingasseite B.

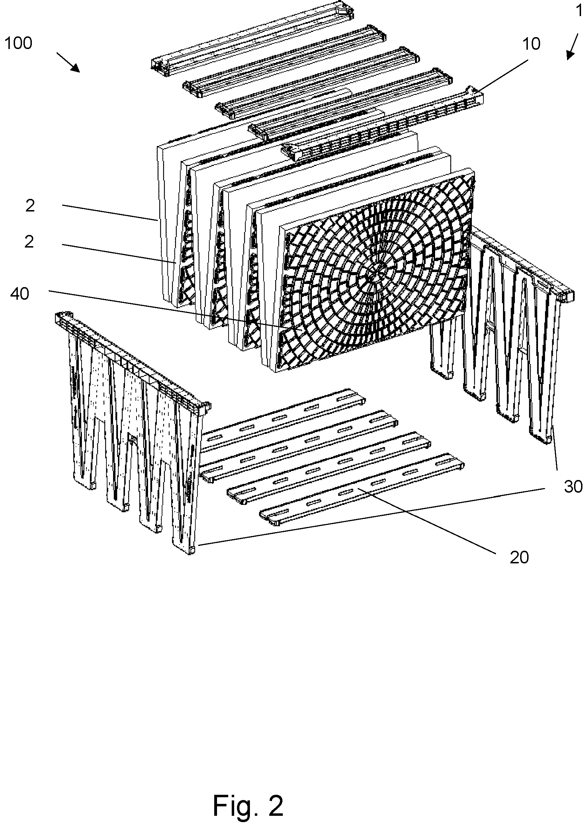

Zur Aufnahme der Filtermedienpakete 2 ist ein Rahmen 1 vorgesehen. Der Aufbau des Rahmens 1 ergibt sich näher aus Fig. 2. Je ein Schutzgitter 40 ist reingasseitig (A) an einem jeweiligen Filtermedienpaket 2 angeordnet. Der Aufbau der Schutzgitter 40 ergibt sich näher aus Fig. 3. Durch die Schutzgitter 40 wird das Filtermedium der Filtermedienpakete 2 in ihrer Position gehalten, vor Beeinträchtigung geschützt und nachfolgende Anlagen vor Beschädigung bewahrt.

In der dargestellten Ausführungsform ist ein jeweiliges Schutzgitter 40 einteilig als Spritzgussteil ausgebildet und an seinem umlaufenden Rand im Bereich einer Randstrebe 45 stoffschlüssig mit dem Rahmen 1 verbunden, z.B. vergossen.

Fig. 2 zeigt eine Explosionsdarstellung eines erfindungsgemäßen Kassettenfilters 100 und den Aufbau des Rahmens 1. Der Rahmen 1 besitzt eine Kopfplatte 10 mit mehreren Traversen und eine parallel dazu angeordnete Fußplatte 20 mit mehreren Traversen sowie dazwischen angeordnete Seitenplatten 30. Die Filtermedienpakete 2 sind zwischen Kopfplatte 10, Fußplatte 20 und Seitenplatten 30 angeordnet. Im dargestellten Ausführungsbeispiel sind die Kopfplatte 10 und die Fußplatte 20 und die Seitenplatten 30 jeweils segmentiert und mehrteilig ausgebildet. In alternativen, nicht dargestellten Ausführungen können die Platten 10, 20, 30 auch einteilig ausgestaltet sein.

Der Filter 100 kann schubladenartig in ein rechteckiges Schubfach einer Filteraufnahme eingeschoben werden (nicht dargestellt). Mit Auflageflächen der Kopfplatte 10 liegt der Filter 100 dann an der Filteraufnahme an und kann mit dieser verbunden werden, z.B. durch Verschrauben. Auch möglich ist, dass eine Filteraufnahme eine Mehrzahl von Fächern aufweist, um eine entsprechende Mehrzahl von Filtern 100 aufnehmen zu können, welche dann matrixartig angeordnet sind und eine sogenannte Filterwand bilden.

Fig. 3 zeigt eine Detailansicht eines Schutzgitters 40 in einer ersten Ausführungsform.

Das Schutzgitter 40 weist eine Gitterstruktur auf mit konzentrisch um ein Zentrum 41 des Schutzgitters 40 angeordneten kreisförmigen, im Wesentlichen geschlossenen Kurven 42 unterschiedlicher Größe. Mit zunehmendem Abstand vom Zentrum 41 des Schutzgitters nimmt der Durchmesser der kreisförmigen geschlossenen Kurven 42 zu.

Die Gitterstruktur des Schutzgitters 40 verfügt weiter über eine Vielzahl von radial zum Zentrum 41 des Schutzgitters 40 orientierten Verbindern 44, welche die geschlossenen Kurven 42 miteinander verbinden.

Die Verbinder 44 sind relativ kurz und zwischen je einer ersten und einer zweiten geschlossenen Kurve 42 radial versetzt zu Verbindern 44 zwischen der zweiten und einer nächsten geschlossenen Kurve 42 angeordnet, sodass keine vom Zentrum 41 des Schutzgitters 40 geradlinig zum Rand des Schutzgitters 40 führende Streben gebildet werden.

In den Randbereichen der Schutzgitter 40 werden die geschlossenen Kurven 42 durch Ausschnitte 47 der Kurven 42 gebildet, nämlich durch Teilkreise. Das konzentrische Muster der geschlossenen Kurven 42 wird also bis in den Randbereich fortgesetzt.

Die geschlossenen Kurven 42 können zumindest teilweise einzelne Unterbrechungen 43 aufweisen, insbesondere in den Randbereichen des Schutzgitters 40 und werden trotzdem noch als geschlossene Kurven 42 bezeichnet.

Das Schutzgitter 40 wird von einer Randstrebe 45 umfasst, welche die Außenkontur des rechtwinkligen Schutzgitters 40 bildet. Auch die Randstrebe 45 kann Unterbrechungen 46 aufweisen.

Durch die Unterbrechungen 43, 46 kann Material eingespart werden, ohne die Stabilität und die Berstschutzwirkung des Schutzgitters 40 wesentlich zu reduzieren, solange nur wenige Unterbrechungen 43, 46 vorgesehen sind.

Fig. 4 a, , c zeigen Prinzipskizzen von alternativen Ausführungsformen eines Schutzgitters 40. Zur besseren Übersichtlichkeit wurden die Verbinder 44 der Gitterstruktur weggelassen.

Gemäß Fig. 4a sind die geschlossenen Kurven 42 als Ovale ausgebildet. Gemäß Fig. 4c sind die geschlossenen Kurven 42 um zwei Zentren 41 herum konzentrisch angeordnet.

Die weiteren Merkmale der Schutzgitter 40 können ähnlich dem in Fig. 3 dargestellten Schutzgitter 40 ausgeführt sein.

Gemäß Fig. 4b sind die geschlossenen Kurven 42 als Vielecke ausgebildet. Gemäß Fig. 4d sind die geschlossenen Kurven 42 zentrisch um ein Zentrum spiralförmig angeordnet.

## Patentansprüche

1. Kassettenfilter (100) mit einer Mehrzahl von Filtermedienpaketen (2), wobei je zwei Filtermedienpakete (2) v-förmig angeordnet sind und die Filtermedienpakete (2) von einem Gas zu dessen Reinigung von einer Rohgasseite (A) des Filters (100) zu einer Reingasseite (B) des Filters (100) durchströmt (L) werden, mit einem Rahmen (1) zur Aufnahme der Filtermedienpakete (2), und mit Schutzgittern (40), wobei je ein Schutzgitter (40) reingasseitig (A) an einem jeweiligen Filtermedienpaket (2) angeordnet ist,
**dadurch gekennzeichnet dass**
die Schutzgitter (40) eine Gitterstruktur aufweisen mit zentrisch um mindestens ein Zentrum (41) des Schutzgitters (40) angeordneten geschlossenen Kurven (42) unterschiedlicher Größe und mit einer Vielzahl von radial zum Zentrum (41) des Schutzgitters (40) orientierten Verbindern (44), welche die geschlossenen Kurven (42) miteinander verbindenund, dass
die geschlossenen Kurven (42) als konzentrische Ovale ausgebildet sind, insbesondere als Kreise oder Ellipsen.

2. Kassettenfilter nach Anspruch 1, **dadurch gekennzeichnet, dass** die Verbinder (44) zwischen je einer ersten und einer zweiten geschlossenen Kurve (42) radial versetzt zu Verbindern (44) zwischen der zweiten und einer nächsten geschlossenen Kurve (42) angeordnet sind.

3. Kassettenfilter nach einem der vorangehenden Ansprüche, **dadurch gekennzeichnet, dass**
die geschlossenen Kurven (42) in den Randbereichen der Schutzgitter durch Ausschnitte (47) der Kurven (42) gebildet werden.

4. Kassettenfilter nach einem der vorangehenden Ansprüche, **dadurch gekennzeichnet, dass**
die geschlossenen Kurven (42) zumindest teilweise einzelne Unterbrechungen (43) aufweisen, insbesondere in den Randbereichen der Schutzgitter (40).

5. Kassettenfilter nach einem der vorangehenden Ansprüche, **dadurch gekennzeichnet, dass**
die geschlossenen Kurven (42) zentrisch um ein, zwei, drei oder vier Zentren (41) herum angeordnet sind.

6. Kassettenfilter nach einem der vorangehenden Ansprüche, **dadurch gekennzeichnet, dass**
ein jeweiliges Schutzgitter (40) von einer unterbrochenen Randstrebe (45) umfasst wird.

7. Kassettenfilter nach einem der vorangehenden Ansprüche, **dadurch gekennzeichnet, dass**
ein jeweiliges Schutzgitter (40) einteilig ausgebildet ist, insbesondere als Spritzgussteil.

8. Kassettenfilter nach einem der vorangehenden Ansprüche, **dadurch gekennzeichnet, dass**
die Schutzgitter (40) mit dem Rahmen (1) stoffschlüssig verbunden sind.

## Claims

1. Cassette filter (100) having a plurality of filter media packs (2), wherein two filter media packs (2) in each case are arranged in a v-shape, and a gas flows through (L) the filter media packs (2) from a dirty gas side (A) of the filter (100) to a clean gas side (B) of the filter (100) in order to clean said gas, having a frame (1) for receiving the filter media packs (2), and having protective grids (40), wherein a respective protective grid (40) is arranged on each filter media pack (2) on the clean gas side (A),
**characterized in that**
the protective grids (40) have a grid structure with closed curves (42) of different sizes arranged centrically around at least one centre (41) of the protective grid (40) and with a multiplicity of connectors (44), which are oriented radially with respect to the centre (41) of the protective grid (40) and connect the closed curves (42) to one another and **in that**
the closed curves (42) are designed as concentric ovals, in particular as circles or ellipses.

2. Cassette filter according to Claim 1, **characterized in that**
the connectors (44) between in each case a first and a second closed curve (42) are arranged radially offset with respect to connectors (44) between the second and a subsequent closed curve (42).

3. Cassette filter according to one of the preceding claims, **characterized in that**
the closed curves (42) in the edge regions of the protective grids are formed by segments (47) of the curves (42).

4. Cassette filter according to one of the preceding claims, **characterized in that**
at least some of the closed curves (42) have isolated interruptions (43), in particular in the edge regions of the protective grids (40).

5. Cassette filter according to one of the preceding claims, **characterized in that**
the closed curves (42) are arranged centrically around one, two, three or four centres (41).

6. Cassette filter according to one of the preceding claims, **characterized in that**
each protective grid (40) is surrounded by an interrupted edge strut (45).

7. Cassette filter according to one of the preceding claims, **characterized in that**
each protective grid (40) is formed in one piece, in particular as an injection-moulded part.

8. Cassette filter according to one of the preceding claims, **characterized in that**
the protective grids (40) are connected to the frame (1) in a materially bonded manner.

## Revendications

1. Filtre à cassette (100) comprenant une pluralité de paquets de milieu filtrant (2), un ensemble de deux paquets de milieu filtrant (2) étant disposé en forme de V et les paquets de milieu filtrant (2) étant traversés (L) par un gaz, afin de nettoyer celui-ci, depuis un côté gaz brut (A) du filtre (100) vers un côté gaz propre (B) du filtre (100), un cadre (1) destiné à recevoir les paquets de milieu filtrant (2), et des grilles de protection (40), une grille de protection (40) étant disposée du côté gaz propre (A) sur un paquet de milieu filtrant respectif (2),
**caractérisé en ce que**
la grille de protection (40) comporte une structure de grille pourvue de courbes fermées (42) de différentes tailles, qui sont disposées de manière centrée autour d'au moins un centre (41) de la grille de protection (40), et d'un grand nombre de connecteurs (44) qui sont orientés radialement vers le centre (41) de la grille de protection (40) et qui relient les courbes fermées (42) entre elles et
les courbes fermées (42) sont réalisées sous forme d'ovales concentriques, en particulier sous forme de cercles ou d'ellipses.

2. Filtre à cassette selon la revendication 1, **caractérisé en ce que** les connecteurs (44) situés entre une première et une deuxième courbe fermée (42) sont décalés radialement des connecteurs (44) situés entre la deuxième et une courbe fermée suivante (42).

3. Filtre à cassette selon l'une des revendications précédentes, **caractérisé en ce que** les courbes fermées (42) situées dans les zones de bord de la grille de protection sont formées par des découpes (47) des courbes (42).

4. Filtre à cassette selon l'une des revendications précédentes, **caractérisé en ce que** les courbes fermées (42) comportent au moins partiellement des interruptions individuelles (43), notamment dans les zones de bord de la grille de protection (40).

5. Filtre à cassette selon l'une des revendications précédentes, **caractérisé en ce que** les courbes fermées (42) sont disposées de manière centrée autour d'un, deux, trois ou quatre centres (41).

6. Filtre à cassette selon l'une des revendications précédentes, **caractérisé en ce qu'**une grille de protection respective (40) est entourée d'une entretoise de bord interrompue (45).

7. Filtre à cassette selon l'une des revendications précédentes, **caractérisé en ce qu'**une grille de protection respective (40) est formée d'une seule pièce, en particulier sous forme d'une pièce moulée par injection.

8. Filtre à cassette selon l'une des revendications précédentes, **caractérisé en ce que** la grille de protection (40) est reliée au cadre (1) par une liaison de matière.
